# EUROPEAN PATENT SPECIFICATION

(11) **EP 0 864 447 B1**
(45) Date of publication and mention of the grant of the patent: **23.07.2003**
(21) Application number: 98104560.2
(22) Date of filing: 13.03.1998
(51) Int. Cl.: B60C 11/03, B60C 11/18

(54) **Low-running-temperature tyre**
Reifen mit geringer Rolltemperatur
Pneu à basse température de fonctionnement

(30) Priority: 14.03.1997 IT MI970584
(43) Date of publication of application: 16.09.1998
(73) Proprietor: PIRELLI PNEUMATICI Società per Azioni, 20126 Milano (IT)
(72) Inventor: Nahmias Nanni, Marco, 20121 Milan (IT); Caretta, Renato, 21013 Gallarate (VA) (IT)
(74) Representative: Giannesi, Pier Giovanni

(56) References cited:
- EP-A- 0 104 133
- EP-A- 0 105 822
- EP-A- 0 200 179
- EP-A- 0 662 396
- EP-A- 0 686 515
- EP-A- 0 715 974
- DE-A- 3 048 489
- US-A- 4 319 620
- US-A- 5 225 011

## Description

The present invention relates to tyres for vehicle wheels, and more particularly to tyres for motorcycles and cars, but it may also apply to all types of tyres; more specifically the invention pertains to the tread band of these tyres, being therein also included raw or pre-moulded treads for covering or "recapping" worn tyres, as well as to a method of achieving optimal thermal conditions in use.

It is known that not only good behavioural features in terms of running on any kind of road surfaces, i.e. dry, wet or snow-covered surfaces, are presently required from modern tyres, but also a good qualitative level as regards all other operational features such as comfort, smooth rolling and yield per kilometre, and these features must be maintained even when the tyre runs under critical or exaggerated conditions, due for example to the high speed in connection with the road track, in particular in combination with a high environmental temperature.

Said behavioural and operational features are determined by forming grooves and circumferential and/or transverse hollows of appropriate sizes and orientation in the tread band, thereby giving rise to formation of ribs and/or blocks variously disposed in the band so as to form a typical tread pattern depending on the intended type of use for the tyre; in particular said pattern is herein defined as symmetric, when it is always the same irrespective of the rolling direction of the tyre, asymmetric when one side thereof is different from the axially opposite side, and finally directional when it identifies a particular preferred rolling direction of the tyre, that is when it is in mirror image relationship relative to the equatorial plane of the tyre itself.

Preferably, in particular for the purpose of achieving good behavioural grip features on a wet and snow-covered road surface and when tyres are run on a bend, blocks and ribs are provided with an appropriate lamelliform pattern, that is a series of narrow cuts of greater or lesser density or thickness oriented in a direction substantially perpendicular to the movement direction along which they have to perform their function.

All that being stated, it is known that the behavioural tyre features are adversely affected to a great extent by the working temperature of the tyre, and one of the most difficult problems to be solved has always been and still is that of maintaining a good resistance to wear and an appropriate grip both at temperatures of normal use of the tyre (30°-50°), and when the tyre overcomes said temperatures due to strong thermal and mechanical stresses, such as those resulting from a so-called use "under extreme conditions" of the tyre itself, for example.

Difficulty in keeping these desired features under any running conditions essentially originates from the fact that resistance to wear and grip are two factors substantially incompatible with each other: actually, in order that the tyre may achieve a good resistance to wear and low resistance to rolling, blends having a low hysteresis value need to be employed, which blends, as such, are subjected to dissipate a limited amount of energy during rolling.

On the other hand, for achievement of the desired tyre grip, blends of a high hysteresis value are required, which blends, as such, are subjected to dissipate an amount of energy adapted to ensure high adhesion between the tread band and the ground.

It is to remember that the temperature reached by the blend in use is proportional to the amount of dissipated energy and therefore to its hysteresis value.

As a result, an optimal blend forming the tread band should have quite opposite hysteresis behaviours, incompatible with each other, if one would wish to simultaneously optimize all performance features of the tyre.

Actually, all attempts carried out in the art in order to improve the tyre performance in a temperature range different from temperatures of normal use, have encountered either an important and undesired loss of grip, or an important worsening in the resistance to abrasion of the tread band; sometimes both drawbacks were even present.

The Applicant too, in the past, has tried to solve this problem, in particular with a tyre being the object of the Italian Patent No. 1,087,461 to its name.

This tyre is provided with a tread band consisting of two axially contiguous circumferential portions of different composition, the first portion of which is made of a blend having a low glass-transition temperature (in the following: Tg), included between -55° and -30°, whereas the blend of the second portion has a high Tg, included between -25° and -10°. In contrast with some advantages achieved under conditions of normal or high working temperatures, under winter conditions when the tyre works at low environmental temperatures, close to the temperature of the highest Tg (-10°), it shows an important decay in its behavioural performance.

US 4 319 620 discloses a tyre according to the preamble of claim 1.

US 5 225 011 (in the name of the Toyo Tire & Rubber Co. Ltd.) refers to a tyre of superior cut resistance. This tyre has a tread with a center rubber and a side rubber arranged on both sides of the center rubber. The center rubber has a heat build-up of 15-30°, and the side rubber has a lower heat build-up, i.e. from 14° to 25°. The heat build-up difference if said rubber is obtained irrespective from the silica (white filler) content of the rubber mixture.

A practical consequence of the above is that said problem appears to be substantially unsolved by the known art.

In particular, the tread bands of known type do not succeed in keeping the same grip when the tyre, under extreme use conditions, overcomes the above mentioned standard temperatures of use (30°-50°C), without, on the other hand, simultaneously impairing resistance to abrasion.

In accordance with the present invention, it has been surprisingly found that it is possible to keep the behavioural tyre features in use to normal condition, while improving them to a higher level during use under extreme conditions.

Initially the Applicant had tackled the problem of producing tyres comprising coloured inserts, such as for example having a white sidewall, and in particular tyres with a tread band of two distinct colours, including at least one of said inserts. A two-coloured tyre, in addition to having an agreeable and unusual aesthetic aspect, which will enable car personalization by an owner with his/her preferred colours, may also have more practical functions such as that of enabling a correct mounting of the tyre to the vehicle in case of tyres for which correct mounting is required (when the tread band pattern cannot be of any help) or an immediate identification of the type of tyre stored among a great number of other types in premises often weakly lit.

The Applicant has become aware of the fact that making coloured blends excludes the use, even to minimum proportions, of carbon black as a reinforcing filler, because carbon black has such a colouring power that the effect of any other coloured pigment is made pointless.

Only the so-called "white" fillers can be coloured with appropriate pigments and among these the preferred fillers for use in tyres, in particular in the tread band, have been identified in fillers of siliceous material, in particular silica.

However, it is known that silica which is useful to give the tyre qualities of low rolling resistance (due to the low hysteresis value of the thus filled blend) and good grip on snow-covered or wet ground, offers lower performance as regards grip on a dry ground and resistance to wear so that its use as a reinforcing filler in the tyre tread band must be carefully controlled.

By observing the results of road tests of a series of prototypes having the tread band consisting of two different circumferential portions disposed in axial side by side relationship, one consisting of a blend mainly filled with carbon black (black blend) and the other consisting of a blend exclusively filled with white filler (white blend), the Applicant has been able to ascertain that behavioural results on a dry road of said prototypes were always globally better than those of the control tyres having the tread band made of a blend filled with carbon black and with a very high percentage of silica, respectively.

In the progress of studies tending to clarify the reasons of these unexpected and inexplicable results, the Applicant has also carried out some thermographies of the tread band of tyres being tested, thus finding out that the two-coloured tyres of the invention always run at a colder temperature than black tyres: in particular, the black portion of said prototypes too tendentially kept colder than the equivalent tread portion in black tyres.

Although it is not desired to be in any manner linked to this thesis, in accordance with the present invention the improvement achieved in the road behaviour of two-coloured tyres as compared with black tyres is deemed to depend on said lower working temperature of the tyre; on the contrary, improvement achieved as compared with white tyres would depend on the above mentioned and known deficiencies typical of silica in connection with important aspects of the tyre behaviour on the road.

In particular, the white blend portion, or in any case the portion of a low-hysteresis blend, that is a "cold" blend, in tyres provided with a two-blend band, is deemed to generate a synergetic action linked to the lower working temperature in use, that tendentially keeps the adjacent portion of black blend colder than the usual one, in addition to keeping all the tyre taken as a whole colder.

The invention is considered capable of carrying out its effects in a perceptible manner when differences between the hysteresis values and/or the white filler amounts in the two associated blends are preferably included within given limits, as hereinafter more specifically described.

The invention relates to a tyre according to claim 1.

It has been found preferable for the second portion to contain the greater amount of white filler, with a difference between the amounts of said filler present in the two compositions respectively at least equal to 20% by weight in favour of the composition more filled with white filler, provided that the volume of said second portion is such that said temperature decreasing is caused.

In accordance with the above, it has been found preferable for the volume of said second portion to be at least as high as 30% and not higher than 80% of the overall volume of the tread band.

In a further different aspect it has been found preferable for the width of said second portion to be at least as high as 25% and not higher than 80% of the overall width of the tread band, and preferably greater than 50%.

In a novel and still different aspect, the invention relates to a tread band both of raw blend and of an already pre-moulded blend, for use in covering or "recapping" worn tyres, made according to any one of the above mentioned different alternative solutions.

In another and still different aspect, the invention also relates to a method of producing tyres for vehicle wheels, and specifically tread bands for said tyres having coloured inserts of colours different from black.

The invention as above defined in a great variety of aspects, will be better understood with the aid of the following description and the accompanying drawing aiming at describing and illustrating some preferred embodiments thereof, although not in a limiting sense.
- Fig. 1 is an axial transverse section of a tyre of the type for four-wheeled vehicles, in accordance with the invention;
- Fig. 2 is an axial transverse section of a tyre of the type for two-wheeled vehicles, in accordance with the invention;
- Fig. 3 is a plan view of a limited portion of tread band in accordance with the invention moulded with a tread pattern of the symmetric type;
- Fig. 4 is a front view of a tyre with a tread band in accordance with the invention, moulded with a tread pattern of the asymmetric type;
- Fig. 5 is a plan view of a limited portion of tread band in accordance with the invention moulded with a tread pattern of the directional type;
- Fig. 6 shows a thermography of the tyre tread in accordance with the invention compared with that of a tyre of known type, referred to the same tread pattern, of the asymmetric type, under the same working conditions.

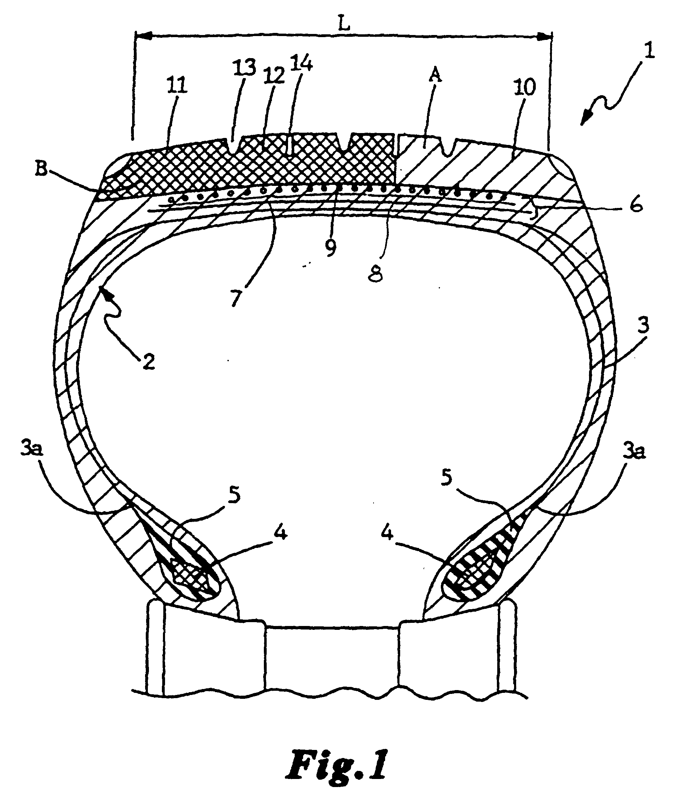

Fig. 1 shows the structure of the inventive tyre in a type for four-wheeled vehicles. Such a structure substantially does not differ from the general structure of traditional tyres, which on the other hand is well known to those skilled in the art: differences as compared with the latter will become apparent in the following of the present description.

Tyre 1 comprises a carcass 2 of a strong structure formed of at least one ply 3 of rubberized fabric comprising reinforcing cords of textile or metal material buried into the elastomer material of the fabric, said ply having its ends 3a each turned up about an anchoring ring or core 4, the latter being provided on its radially outer surface with a rubber filling 5. Preferably the turned-up flaps 3a of the carcass plies extend up radially outwardly along at least part of the side of said filling.

As known, the tyre area comprising core 4 and filling 5, that is the radially inner portion of the tyre sidewall, forms the tyre bead intended for anchoring of the tyre to a corresponding mounting rim.

Disposed in known manner on the carcass, preferably of the radial type, that is having the reinforcing cords lying in planes containing the tyre axis of rotation, is a tread band 10, provided with a raised pattern, intended for rolling contact of the tyre on the ground. The width L of this band is identified by the mutual distance between the intersection points of the tread and sidewall curvatures.

This tread pattern may be comprised of a plurality of ribs and/or blocks 11, 12 separated from each other by corresponding hollows and grooves 13, 14, directed both circumferentially and transversely and said ribs and/or blocks may be provided with various cuts and narrow cuts or "lamellae" 15, the whole having configurations well known to those skilled in the art.

Tyre 1 may also be comprised of a belt structure 6 disposed crownwise to carcass 2, interposed between the carcass and tread band, extended from one side to the other side of the tyre, i.e. substantially as wide as the tread band, comprising two radially superposed layers 7, 8 of reinforcing cords, preferably of metal material, parallel to each other in each layer and disposed in crossed relationship with those of the adjacent layer relative to the equatorial plane of the tyre, and preferably a further radially outermost layer 9 of reinforcing cords, preferably of textile material, and more preferably of a heat-shrinkable material (nylon) oriented at 0°, i.e. in a circumferential direction.

In accordance with the invention, the tread band is made up of two circumferential portions, a first (hot) portion A and a second (cold) portion B respectively, which are axially contiguous and of different compositions; more specifically, said two compositions have a different hysteresis value, and the difference between the two values is such that it causes each portion, during the tyre running, to work at a different temperature.

Preferably, the hysteresis difference must be at least equal to 10% of the higher value, and preferably greater than 20% of said value.

The hysteresis value to which reference is made is the loss factor (tan δ) measured on a cylindrical test piece of a 14 mm diameter and 25 mm length under the following conditions: Temperature of 70°C, deformation frequency equal to 100 Hz in a sinusoidal condition, on a 25%-precompressed test piece submitted to a further deformation width of 3.5% relative to the sizes of the undeformed test piece.

In known manner it is preferable for the test piece to be submitted, before measurement, to a conditioning cycle, in terms of time and frequency cycles, so as to stabilize data of the subsequent measurement.

Said test piece may be also obtained from several suitably-superposed slices of reduced thickness, taken from conveniently prepared parts of the tyre tread, for example.

In an alternative embodiment, the two circumferential portions comprise a first (black) portion A and a second (white) portion B; more specifically, said two compositions have a different reinforcing filler including a white filler, the difference between the white filler amounts present in each of the two compositions respectively being at least equal to 20% of the higher amount, conveniently present in the white portion.

It has been found that preferably the black composition must contain at least 40% of carbon black, whereas the white composition must contain at least 20% of white filler, relative to the total amount of the reinforcing filler, with a difference of white filler between the two compositions at least equal to 20% by weight in favour of the composition more filled with white filler.

It has been found that the invention accomplishes its effects in a particularly appreciable manner when the volume of the second portion B, i.e. that of the cold composition or white composition, is such that the overall running temperature of the tyre is reduced relative to the temperature of an equivalent tyre submitted to the same running conditions, provided with a tread made of the cold composition having a greater hysteresis value or, alternatively, made of the black composition having the smaller amount of white filler.

More specifically, it has been found that when.the volume of said second portion B represents an important amount of the overall volume of the tread band, the running temperature both of the whole tread band and of each blend portion, as well as of all the tyre taken as a whole, keeps to a lower value than that of an equivalent tyre having the tread band thoroughly made of the corresponding black or hot blend.

By "equivalent tyre" it is herein intended a tyre quite identical with that of the invention, except for the different composition of the tread blend.

It has been found that in the tyre of the invention decreasing in the overall temperature, i.e. the inner temperature of the tyre, is in the order of at least 5°C or more.

In accordance with the invention, an important amount of the overall volume of the tread band is deemed to be represented by an amount at least as high as 30% of the overall volume of said tread band and preferably higher than 50%.

On the other hand, on increasing of the value of this amount, the tread responsiveness to wear and grip loss increases, so that, in order to enable maintenance of the good behavioural performance achieved by the tyre of the invention, it is deemed that the volume of this second portion B should not overcome 80% of the overall volume of said tread band.

The blend volume of the two tread portions obviously also depends on the features of the pattern formed therein, and in particular on the ratio between lands and hollows, which is generally different between the two portions in the case of asymmetric patterns, so that the width of the second portion, i.e. the so-called cold or white portion, is deemed to be preferably included between 25% and 80% of the overall width of the tread band and more preferably greater than 50% of said width.

In a preferred embodiment of the invention, in particular if a coloured composition is wished to be obtained, the second portion B comprises the so-called white filler preferably in an exclusive manner, as the reinforcing filler. In other words, preferably the second portion B is substantially devoid of carbon black.

Still in accordance with the invention, this colouring is preferably made by mixing the white filler with colouring pigments selected from a wide variety of possible colours.

In every country there are many suppliers for these colouring agents and compositions containing an already coloured white filler: the Applicant for accomplishment of its prototypes has selected the material available from the Italian associated firm CLARIANT.
With reference to the blends of the invention, it is to note that carbon black for the reinforcing filler is selected from those known in the art: the Applicant preferably uses carbon black having an absorption value DBP, measured following ISO 4656-1 standards, equal to at least 100 ml/100g, preferably included between 130 and 160 ml/100 g, and a surface area, as determined based on cetyltrimethylammonium absorption according to ISO 6810 standards (CTAB) not exceeding 130 m²/g and preferably included between 70 and 115 m²/g.

As regards the so-called "white" fillers, it is pointed out just by way of example that they are reinforcing fillers of the inorganic type such as gypsum, talc, kaolin, bentonite, titanium dioxide, silicates of various kinds and silica.

Preferably the white blend of the invention comprises a silica-based white filler, that is a reinforcing agent based on silicon dioxide (silica), silicates and mixtures thereof, having a surface area, measured according to BET method, following ISO 5794-1 standard, included between 70 and 300 m²/g, and an appropriate binding agent capable of chemically reacting with silica and bonding silica with a polymeric base during vulcanization thereof.

Among the great number of binders, the Applicant has found it convenient to use a known silane binding agent, identified as Si69, available from DEGUSSA.

As regards the polymeric base of the blends in accordance with the invention, it can be selected from the group comprising: natural rubber, 1,4-cis polybutadiene, polychloroprene, 1,4-bis polyisoprene, optionally halogenated isobutene-isoprene copolymers, butadiene-acrylonitrile, styrene-butadiene copolymers and styrene-butadiene-isoprene terpolymers, obtained both in solution and in emulsion, ethylene-propylene-diene terpolymers.

In accordance with the invention, these polymeric bases can be used individually or in a mixture thereof in accordance with the features that are wished to be imparted to the finished product.

By way of example only and not in a limiting sense, two examples of compositions are given hereinafter for the black blend and the white blend respectively, that may be used for tyres in accordance with the invention.

Blend of portion A, in the version with a reinforcing filler exclusively of carbon black, may have the following composition, set forth in parts by weight:
- polymeric base 100.0
- carbon black 68.0
- ZnO 2.0
- stearic acid 1.0
- antioxidants 2.5
- anti-fatigue agents 1.0
- plasticizers 15
- sulphur 1.2
- accelerating agents 1.8

Blend of portion B, in the version including only said silica-based white filler as the reinforcing filler, may have the following composition, set forth in parts by weight:
- polymeric base 100
- silica 70
- binding agent 8% of silica
- ZnO 2
- stearic acid 1
- antioxidants 2.5
- anti-fatigue agents 1
- plasticizers 15
- sulphur 1.2
- accelerating agents 2.5

For achievement of the results of the invention, said second portion B may be disposed either in the middle of the tread band or at a side position thereof: however, due to the fact that the second portion B is more responsive to wear and grip loss than the first one, the most convenient position in tyres for uses that are not particularly critical is that which is located at the vehicle side when the tyre is mounted thereon, since stress is therein lower during running on a bend. In high-performance tyres or tyres for extreme uses, on the contrary, the centre position will be the preferred one as far as symmetric and directional patterns are concerned and the side position will be the preferred one for asymmetric patterns: actually, such patterns have two axially distinct circumferential areas, an inner area and an outer area respectively, with reference to mounting of the tyre on the vehicle, and in this case said second portion B is preferably situated at the inner area of the pattern, that is the one which is to be located on the vehicle side.

Use of a blend portion reinforced with a white filler, as already said, also enables a convenient colouring of this portion: with reference to that which has been just said, it is apparent that the symmetric or directional pattern in the black tyre does not allow the portion to be mounted on the vehicle side to be seen at sight. It is therefore apparent that by differently colouring the corresponding tread portion, this problem too can be solved.

The invention can be advantageously applied to tyres for motorcycles as well.

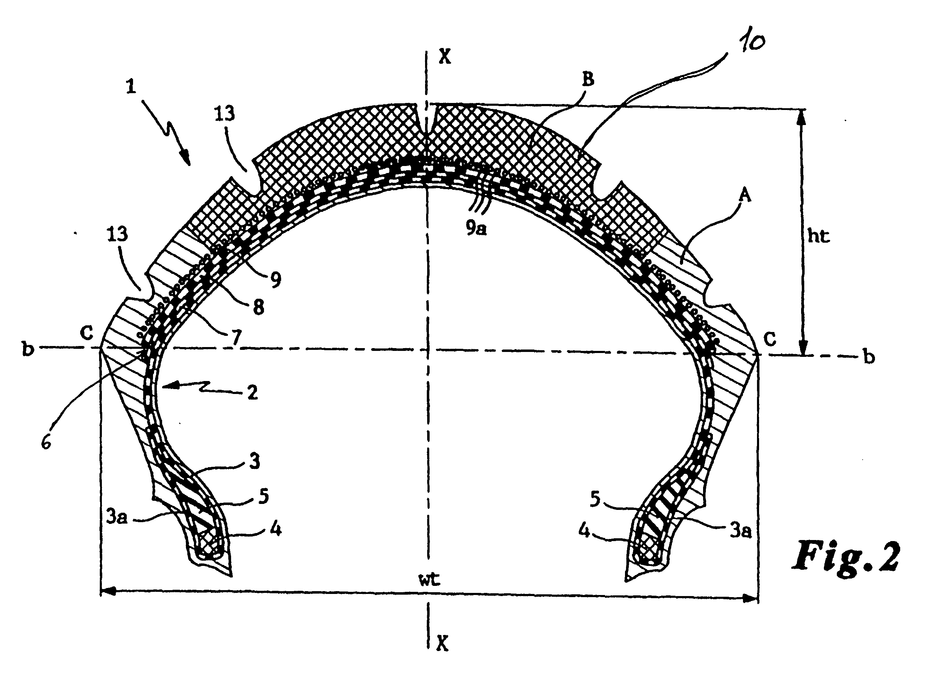

These tyres (Fig. 2) are distinguished by a high transverse curvature, identified by particular values of the ratio of the distance ht of the tread centre from line b passing by the tread ends C-C, measured on the equatorial plane, to the distance wt between said tread ends. This value, generally greater than 0.15, in tyres for front wheels is often even greater than 0.30, against an usual value in tyres for cars in the order of 0.05: in the following of the present description said ratio will be referred to as "curvature ratio". In these tyres, to the ends of the present invention, the tread width must be interpreted as measurement of the tread extension along its curvature profile.

Fig. 2 generally shows a tyre of this type, comprising a very particular geometry structure capable of bearing very critical use conditions; as is known, two-wheeled vehicles in covering a curvilinear trajectory lean over to the internal side of the bend according to an angle referred to as "camber angle", the value of which can reach 65° relative to the plane vertical to the ground.

In this tyre too a carcass structure which is substantially identical with that previously described is provided, to which please refer since the same reference numerals as shown in Fig. 1 have been herein used too. However, it is pointed out that in this case the belt structure 6 comprises a reinforcing wrapping as an essential element, which consists of at least an inextensible cord 9, preferably of metal material, extending circumferentially crownwise to the carcass ply 3 to form a plurality of turns 9a parallel to each other and disposed consecutively in side by side relationship, substantially oriented in the tyre 1 rolling direction, whereas the possible radially-underlying layers 7,8 of inclined cords are less conditioning.

Turns 9a, disposed consecutively in side by side relationship in a curvilinear profile, by virtue of their substantial longitudinal inextensibility, give rise to a structural and dimensional stabilization of tyre 1, according to the desired transverse-curvature profile.

In accordance with the invention, the tread band 10 is conveniently formed of said two blend portions A and B, the cold or white blend portion B being preferably disposed on either side of the equatorial plane for purposes of structural and operating symmetry of the tyre, due to its peculiar geometric shape and the running conditions of the vehicle on a bend. At all events, all considerations, restrictions and critical values already mentioned above are valid for this tyre too.

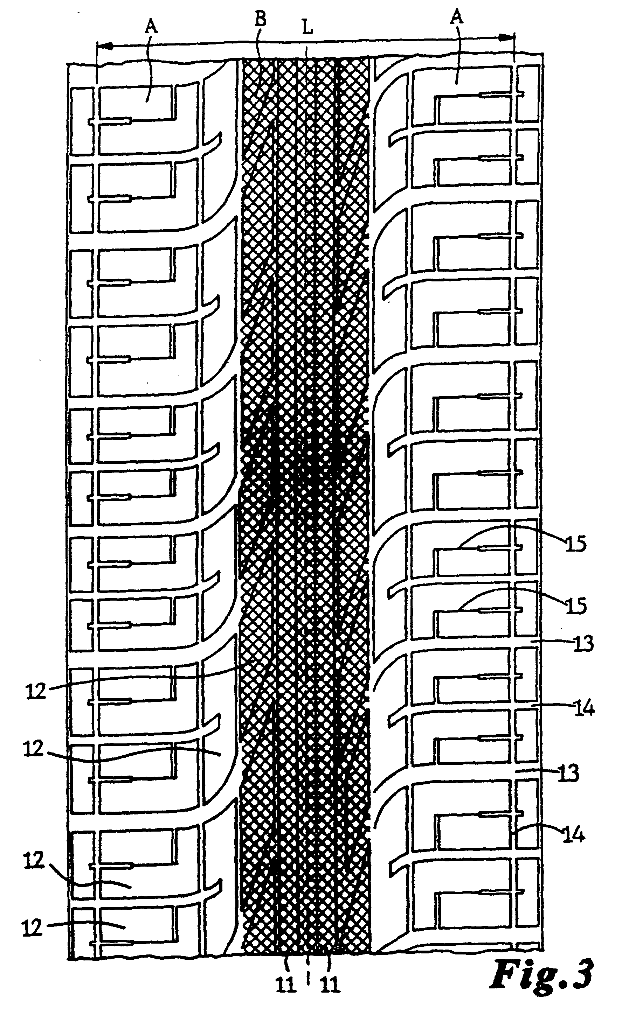

Fig. 3 shows a plan view of a limited portion of tread band of the invention, moulded with a known tread pattern of the symmetric type; with reference to these pattern types, disposition of the white blend portion B can take place in a very free manner, both at a side position relative to the band and at a centre position. In particular in said figure portion B shown in cross-hatching is located at a central position, offset from the equatorial plane of the tyre: in connection with particular technical requirements or for other reasons to be met, said portion B can be located either on one or both of the band sides, or on either side of the equatorial plane, or divided into a plurality of circumferential areas alternated with black blend areas.

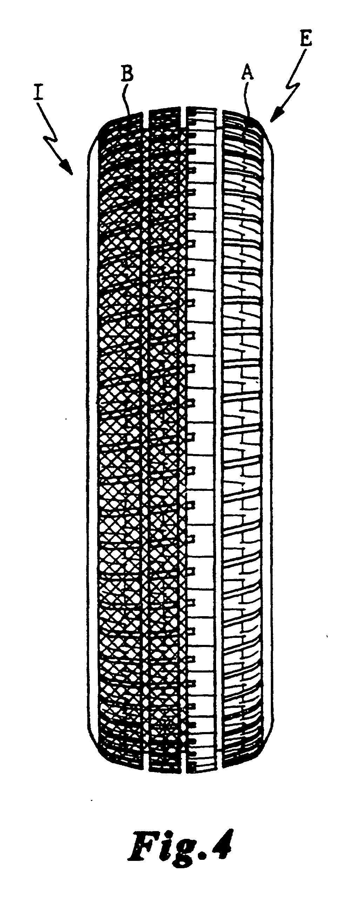

Fig. 4 is a front view of a tyre provided with a tread band in accordance with the invention moulded with a tread pattern of the asymmetric type which has a circumferential area I disposed axially in side by side relationship with a different circumferential area E.

As already said, the tyre is mounted to the vehicle so that area I is disposed at the vehicle side and consequently area E is at the outside. With these pattern types, the white blend portion B (in cross-hatching) will preferably be disposed on a side area of the pattern and, most preferably, at the inner side area I.

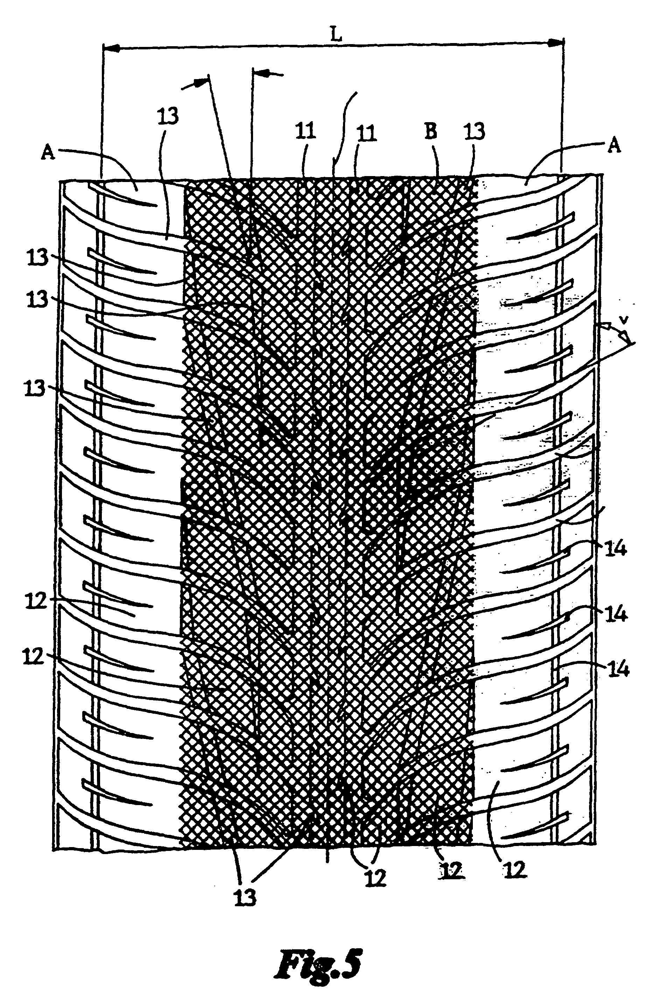

Fig. 5 is a plan view of a restricted portion of the tread band of the invention moulded with a tread pattern of the directional type; with these patterns, the white blend portion B (in cross-hatching) will preferably be disposed at a central position and, most preferably, on either side of the equatorial plane of the tyre.

Operation of the tyre of the invention under running conditions, as compared with an equivalent black tyre taken as a reference, has been analysed also by adopting a particular technique known as tyre thermography. In particular, tyres to be compared are driven in rotation by friction against a drum rotating at a predetermined speed. The Applicant has used a drum of a 1700 mm diameter, rotation of which at a speed of 120 km/hour has been caused. Tyres are mounted to the recommended rim for operation, inflated to a pressure approaching the running pressure and pressed against the drum with a load corresponding to about the rated running load, all that as provided by E.T.R.T.O. (European Tyre and Rim Technical Organization) regulations.

After a time lag varying between 30 and 60 minutes, depending on the tyre size, the carcass structure, the thread pattern and the environmental temperature, it appears that the inner (overall) temperature of the tyre has reached a stabilization: then the tread is photographed by infrared light. Photo can be carried out both with the tyre at a standstill and the tyre in rotation, the modality being selected by the experimenter, depending on its specific requirements. The result is in any case an image of the tyre tread that can be conveniently produced in colours or on a grey scale in which the different colours or grey shades identify, spot by spot, the different tread temperatures, both on the surface and at the hollow bottom.

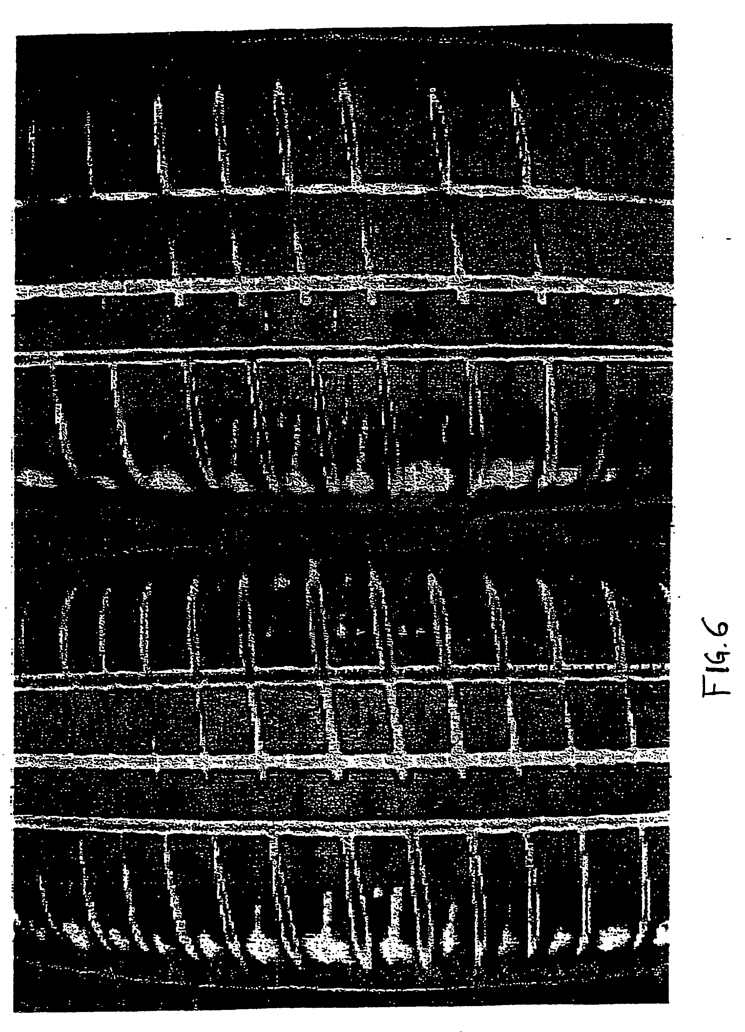

Fig. 6 shows the thermography of the prototype tyre tread compared with a tyre of normal production, manufactured by the Applicant itself, quite similar to the prototype tyre, apart from the fact that the tread band is made of a black blend.

On the chromatic scale selected by the Applicant colour changes from blue to red, passing by sky-blue, green and yellow, on increasing of temperature from 25°C to 65°C. The photographed tyres are the tyre of the invention, to the right in the figure, provided with a black/white two-blend band having the white portion to the right, compared with Pirelli tyre "P 200 CHRONO ENERGY" of normal production, to the left.

The tested tyres had size 175/70 R 13, were mounted to a rim type J 5.5", inflated to a pressure of 2.2 bars and submitted to a load of 450 kg.

The blends of the two portions had the composition set forth in the following table:

**TABLE**

| Ingredient | Black Blend | White Blend |
|---|---|---|
| SBR 1712 | 80 | |
| SBR 1500 | 20 | |
| OE-SSBR | | 80 |
| BR | | 33 |
| Carbon Black - N 220 | 45 | |
| Silica - VN3 available from Degussa | 20 | 70 |
| Binding Agent | 1.6 | 5.6 |
| ZnO | 2.5 | 2.5 |
| Stearic Acid | 2 | 2 |
| Antioxidants | 1.5 | 1.5 |
| Anti-fatigue Agents | 1 | 1 |
| Plasticizers | 10 | 5 |
| Sulphur | 1 | 1.4 |
| Accelerating Agents | 2.3 | 3.8 |

From said Fig. 6 one can easily see how in the tyre of the invention the sky-blue portion, colder than the green one, takes a remarkably greater area than that of the reference tyre, which also extends towards the left tyre shoulder, made of black blend, relative to the corresponding portion of the reference tyre.

Detection of the inner (overall) temperature in the tyre has given a value of 53° for the tyre of the invention against a value of 58° for the reference tyre.

Results achieved from different comparative road tests carried out with the above tyres are reproduced in the following Table.

More particularly, with reference to said Table, columns marked by 1 and 2 refer to the test results achieved with tyre "P 200 CHRONO ENERGY" (column 1) and with the tyre of the invention (column 2) respectively, mounted on a VW POLO 1.4 car. Said Table reproduces the results achieved in behavioural tests on a mixed route including one portion on a normal road and one portion on a car track, on a dry road surface, at an environmental temperature of 14°C.

**TABLE**

| Performance | Tyres | |
|---|---|---|
| | 1 | 2 |
| Running on a straight run | | |
| Directional stability | 6.5 | 6.5 |
| Steering rigidity | 6.5 | 6.5 |

| Fast run | | |
|---|---|---|
| Empty on the centre | 6.0 | 6.5 |
| Steering response speed | 6.5 | 7.0 |
| Steering response progressivity | 5.5 | 6.0 |
| Directional stability on a bend | 6.5 | 6.5 |
| Realignment | 5.5 | 6.5 |

| Extreme Conditions | | |
|---|---|---|
| Yield | 7.0 | 7.0 |
| Release on bends | 6.5 | 7.0 |
| Controllability | 7.0 | 7.0 |

The assigned points indicate judgement obtained by the corresponding tyres, on a 1 to 10 scale, based on the test driver's feeling, with reference to the different behaviours taken into account in the test, where the greater the score is, the better the behaviour.

As one can see from said table, behaviour of the tyre of the invention, substantially identical with the known one under normal running conditions on a straight run, when the tread blend is not particularly engaged, is on the contrary quite better on increasing of the employment severity and increasing of the stress conditions to which the blend is submitted, that is on increasing of the dissipated heat and consequently the temperature achieved by the tread especially when items connected with grip are concerned; actually, from said table one can note that the tyre in question, from every point of view, has obtained a score higher than that of the reference tyre.

It is therefore apparent that the present invention has enabled the desired improvements to be achieved by a synergetic combination between distinct tread band portions, made of a black (hot) blend and a white (cold) blend respectively, so that an exclusively positive overall result is obtained, that is equal to or better than that ascertained on known tyres, seen from any point of view of their behaviour on a road.

It is also clear that the invention has provided a convenient method of reducing the running temperature of the tyres while simultaneously safeguarding all required behavioural qualities: in particular, it is still more evident how the invention can achieve excellent results with reference to recapped tyres, where adhesion between the already vulcanized old carcass and the new, raw or premoulded, tread band has always represented a particularly critical element due to its responsiveness to the operating temperature of the tyre, as proved by the tread pieces that can be found on motorways.

Finally it is apparent that the present invention only has an explanatory function and not a limiting function, so that a person skilled in the art, after understanding the invention as above described will be able to carry out modifications, variations and replacements of all variables associated with the present invention in order to meet particular and contingent application requirements, depending on needs.

## Claims

1. A tyre for vehicle wheels (1) comprising a toroidal carcass (2) provided with axially opposite sidewalls and beads for anchoring said tyre to a corresponding mounting rim, a tread band (10) placed crownwise to said carcass, comprising a plurality of hollows and grooves variously disposed relative to the equatorial plane, adapted to define a raised tread pattern for rolling contact with the ground, and a belt structure (6) interposed between said carcass and tread band, axially extending in a continuous manner between said sidewalls, said tread band being formed of at least two circumferential and axially contiguous portions, a first portion and a second portion respectively, of different compositions wherein the difference between hysteresis values at 70°C of said first and second portion is at least equal to 10% of the higher value **characterized in that** said first portion comprises a reinforcing filler including at least 40% of carbon black, and said second portion comprises a reinforcing filler including a white filler, said white filler being present in an amount of at least 20% of the total amount of reinforcing filler.

2. A tyre as claimed in claim 1, **characterized in that** said second portion contains a greater amount of white filler, the difference between the amounts of said filler respectively present in the two compositions being at least equal to 20% of the higher amount.

3. A tyre as claimed in claim 1, **characterized in that** the volume of said second portion is at least as high as 30% of the overall volume of said tread band.

4. A tyre as claimed in claim 1, **characterized in that** the volume of said second portion does not exceed 80% of the overall volume of said tread band.

5. A tyre as claimed in claim 1, **characterized in that** the width of said second portion is at least as large as 25% of the overall width of the tread band.

6. A tyre as claimed in claim 1, **characterized in that** the width of said second portion does not exceed 80% of the overall width of the tread band.

7. A tyre as claimed in claim 1, **characterized in that** the width of said second portion is at least as large as 50% of the overall width of the tread band.

8. A tyre as claimed in claim 1, **characterized in that** said white filler is a silica-based reinforcing filler.

9. A tyre as claimed in claim 2, **characterized in that** the reinforcing filler of said second portion is substantially free of carbon black.

10. A tyre as claimed in claim 9, **characterized in that** said reinforcing filler is further filled with coloured pigments.

11. A tread band for use in covering or "recapping" worn tyres, **characterized in that** it comprises at least two axially contiguous circumferential portions, a first portion and a second portion respectively, of different compositions, as claimed in anyone of the preceding claims.

## Patentansprüche

1. Reifen für Kraftfahrzeugräder (1)
- mit einer toroidförmigen Karkasse (2), die mit axial gegenüberliegenden Seitenwänden und Wulsten zum Verankern des Reifens an einer entsprechenden Montagefelge versehen ist,
- mit einem Laufflächenband (10), das kronenförmig auf der Karkasse angeordnet ist und eine Vielzahl von Hohlräumen und Nuten aufweist, die unterschiedlich bezüglich der Äquatorialebene angeordnet und für die Bildung eines erhabenen Laufflächenmusters für den Abrollkontakt auf dem Boden angepasst sind, und
- mit einem Gurtaufbau (6), der zwischen der Karkasse und dem Laufflächenband angeordnet ist und sich axial fortlaufend zwischen den Seitenwänden erstreckt,
- wobei das Laufflächenband von wenigstens zwei am Umfang befindlichen und axial durchgehenden Teilen gebildet wird, nämlich einem ersten Teil beziehungsweise einem zweiten Teil mit unterschiedlichen Zusammensetzungen,
**dadurch gekennzeichnet,**
- **dass** der erste Teil einen verstärkenden Füllstoff mit wenigstens 40% Ruß aufweist und
- **dass** der zweite Teil einen verstärkenden Füllstoff mit einem weißen Füllstoff aufweist, der in einer Menge von wenigstens 20% der Gesamtmenge des verstärkenden Füllstoffs vorhanden ist, und
- **dass** die Differenz zwischen den Hysteresewerten bei 70°C des ersten und zweiten Teils wenigstens 10% des höheren Werts entspricht.

2. Reifen nach Anspruch 1, **dadurch gekennzeichnet, dass** der zweite Teil eine größere Menge an weißem Füllstoff enthält, wobei die Differenz zwischen den Mengen des Füllstoffs, der jeweils in den beiden Mischungen vorhanden ist, wenigstens 20% der höheren Menge entspricht.

3. Reifen nach Anspruch 1, **dadurch gekennzeichnet, dass** das Volumen des zweiten Teils wenigstens eine Größe von 30% des Gesamtvolumens des Laufflächenbandes hat.

4. Reifen nach Anspruch 1, **dadurch gekennzeichnet, dass** das Volumen des zweiten Teils 80% des Gesamtvolumens des Laufflächenbandes nicht überschreitet.

5. Reifen nach Anspruch 1, **dadurch gekennzeichnet, dass** die Breite des zweiten Teils wenigstens eine Größe von 25% der Gesamtbreite des Laufflächenbandes hat.

6. Reifen nach Anspruch 1, **dadurch gekennzeichnet, dass** die Breite des zweiten Teils 80% der Gesamtbreite des Laufflächenbandes nicht überschreitet.

7. Reifen nach Anspruch 1, **dadurch gekennzeichnet, dass** die Breite des zweiten Teils wenigstens eine Größe von 50% der Gesamtbreite des Laufflächenbandes hat.

8. Reifen nach Anspruch 1, **dadurch gekennzeichnet, dass** der weiße Füllstoff ein verstärkender Füllstoff auf der Basis von Siliziumdioxid ist.

9. Reifen nach Anspruch 2, **dadurch gekennzeichnet, dass** der verstärkende Füllstoff des zweiten Teils im wesentlichen frei von Ruß ist.

10. Reifen nach Anspruch 9, **dadurch gekennzeichnet, dass** der verstärkende Füllstoff weiterhin mit Farbpigmenten gefüllt ist.

11. Laufflächenband zur Verwendung als Abdeckung oder als Besohlung von verschlissenen Reifen, **dadurch gekennzeichnet, dass** es wenigstens zwei axial benachbarte Umfangsteile, einen ersten Teil beziehungsweise einen zweiten Teil, mit unterschiedlichen Mischungen nach einem der vorhergehenden Ansprüche aufweist.

## Revendications

1. Pneumatique pour roues (1) de véhicules, comprenant une carcasse toroïdale (2) pourvue de flancs axialement opposés et de talons pour accrocher ledit pneumatique à une jante de montage correspondante, une bande de roulement (10) placée dans la direction du bombé sur ladite carcasse, comprenant une pluralité de creux et de gorges disposés de diverses manières par rapport au plan équatorial, servant à définir un motif en relief de bande de roulement destiné à rouler au contact du sol, et une structure de ceinture (6) placée entre lesdites carcasse et bande roulement, s'étendant axialement d'une manière continue entre lesdits flancs, ladite bande de roulement étant constituée d'au moins deux parties circonférentielles et axialement contiguës, respectivement une première partie et une seconde partie, de compositions différentes, **caractérisé en ce que** ladite première partie comporte une charge de renforcement contenant au moins 40% de noir de carbone, et ladite seconde partie comporte une charge de renforcement contenant une charge blanche, ladite charge blanche étant présente à raison d'au moins 20% de la quantité totale de charge de renforcement, et la différence entre les valeurs d'hystérésis à 70°C desdites première et seconde parties est au moins égale à 10% de la valeur la plus élevée.

2. Pneumatique selon la revendication 1, **caractérisé en ce que** ladite seconde partie contient une plus grande quantité de charge blanche, la différence entre les quantités de ladite charge respectivement présentes dans les deux compositions étant au moins égale à 20% de la valeur la plus élevée.

3. Pneumatique selon la revendication 1, **caractérisé en ce que** le volume de ladite seconde partie atteint au moins 30% du volume global de ladite bande de roulement.

4. Pneumatique selon la revendication 1, **caractérisé en ce que** le volume de ladite seconde partie ne dépasse pas 80% du volume global de ladite bande de roulement.

5. Pneumatique selon la revendication 1, **caractérisé en ce que** la largeur de ladite seconde partie atteint au moins 25% de la largeur globale de la bande de roulement.

6. Pneumatique selon la revendication 1, **caractérisé en ce que** la largeur de ladite seconde partie ne dépasse pas 80% de la largeur globale de la bande de roulement.

7. Pneumatique selon la revendication 1, **caractérisé en ce que** la largeur de ladite seconde partie atteint au moins 50% de la largeur globale de la bande de roulement.

8. Pneumatique selon la revendication 1, **caractérisé en ce que** ladite charge blanche est une charge de renforcement à base de silice.

9. Pneumatique selon la revendication 2, **caractérisé en ce que** la charge de renforcement de ladite seconde partie est sensiblement exempte de noir de carbone.

10. Pneumatique selon la revendication 9, **caractérisé en ce que** ladite charge de renforcement contient en outre des pigments colorés.

11. Bande de roulement servant à couvrir ou «rechaper» des pneumatiques usagés, **caractérisée en ce qu'**elle comporte aux moins deux parties circonférentielles axialement contiguës, respectivement une première partie et une seconde partie, de compositions différentes, selon l'une quelconque des revendications précédentes.
